# EUROPEAN PATENT APPLICATION

(11) **EP 1 041 740 A1**
(43) Date of publication of application: **04.10.2000**
(21) Application number: 99302539.4
(22) Date of filing: 31.03.1999
(51) Int. Cl.: H04B 7/185

(54) **Declining a call**

(71) Applicant: ICO Services Ltd., London W6 9BN (GB)
(72) Inventor: Grayson, Mark, London, W4 2QT (GB); Poskett, Peter, Bucks, SL7 3RZ (GB)
(74) Representative: Read, Matthew Charles

(57) **Abstract**

For a call to a user terminal (UT 1) for a satellite mobile telecommunications network, call initiation signals (S1 - S7) are transmitted to the user terminal with a first relatively high link margin and a traffic channel (TCH) for the call is thereafter opened (S17) with a second relatively low link margin, wherein a determination of transmission quality is made (S9) using signals of the first relatively high link margin and if the determined transmission quality indicates that the traffic channel cannot be supported at said relatively low link margin, an indication (S9.5) is provided to the user of the terminal to allow the user to try to improve the link margin, and the call initiation is terminated if the determined transmission quality does not improve thereafter to support the second link margin for the traffic channel. A declining source (31) produces a declining signal when the user terminal is in a situation where its user may not try to improve the link margin, and a call release signal is transmitted (S10b) to terminate the call initiation in response to the declining signal when said determination indicates that the traffic channel cannot be supported at the second link margin.

## Description

This invention relates to controlling establishment of incoming calls in a mobile telecommunications system and has particular but not exclusive application to a satellite telecommunications network to decline mobile terminated calls automatically when a call attempt has an insufficient link margin.

Terrestrial mobile telecommunications systems are well known and a number of different systems have developed which operate according to different standards, both analog and digital. In Europe and the Far East, excluding Japan, and elsewhere, the digital Global System Mobile (GSM) network has become popular, whereas in the USA, networks which operate according to the IS-41 recommendations such as the Advanced Mobile Phone System (AMPS) and the Digital Advanced Mobile Phone System (DAMPS) are used. In Japan, the Personal Handiphone System (PHS) and the Personal Digital Communication (PDC) network are in use. More recently, proposals have been made for a Universal Mobile Telecommunications System (UMTS). These networks are all cellular and land-based but have differences in architecture and use different signalling protocols and transmission frequency bands.

For example in GSM, mobile stations such as mobile telephone handsets communicate with a land-based network over a radio interface. Details of the subscriber are held in the network by a home location register (HLR) and communicated to visitor location registers (VLRs) associated with mobile switching centres (MSCs) when the subscriber roams to different parts of the network. Details of the subscriber are also provided to the mobile station by a smartcard known as a subscriber identity module (SIM) which is inserted in the mobile station.

In GSM, a mobile terminated call is established by the following procedure. A paging signal is broadcast in cells where the mobile station is likely to be using a PAGCH (Paging and Access Grant Channel). The mobile station responds by sending a channel request in a RACH (Random Access CHannel). The channel request is passed through to the base station controller and a SDCCH (Slow Dedicated Control CHannel) allocation is returned and its description transmitted to the mobile station in the PAGCH. The SDCCH is used for subsequent set up exchanges.

Once the SDCCH has been allocated by the base station controller the UT responds with an initial message indicating a response to paging and including identity information sufficient for the visited MSSC to associate the message with the originating call attempt. The visited mobile switching centre issues a set-up message to the mobile station which is sent in the allocated SDCCH. If the mobile station can accept the call, it replies in the SDCCH with a call confirmed message. The mobile station then alerts the user by producing an audio signal and sends an Alerting message to the visited mobile switching centre using the SDCCH. An address complete message is sent by the visited MSC to the network of the calling party either on receipt of the call confirmed message or the alerting message. Also, a ringing signal is produced at the mobile station.

The user responds to the ringing signal by lifting the handset of the mobile station or pressing a button. This action causes the mobile station to send a Connect message to the visited mobile switching centre using the SDCCH. The visited MSC then instructs the base station controller to allocate a TCH (Traffic CHannel) to the mobile station. The mobile station is notified of the allocated TCH using the SDCCH. The mobile station confirms the allocation of TCH to the visited MSC using the allocated TCH and the visited MSC sends an answer message to the calling party's network so that the speech connection can be established. At this time, the SDCCH is de-allocated in the network and a connect acknowledgement is sent back to the mobile station. Thereafter, the user and the calling party can converse using the allocated TCH.

A minimum requirement is that the user is able to conduct a telephone call in a location providing an unblocked line-of-sight path between the mobile station and the transmitter. The transmitted signal characteristics providing this minimum level of service may be defined as providing a 0dB link margin. It will be understood that the link margin can be increased by increasing the transmission power or by repeating the transmitted data, with the advantage of providing improved reception in the event of signal fading or blocking but at the expense of increased allocation of system resources.

In GSM systems, all of the signals used to establish and carry traffic for a mobile terminated call use the same link margin and typically, a relatively high 30dB link margin is provided for each of the PAGCH, the SDCCH and the TCH.

Mobile telecommunication systems have been proposed that use satellite communication links between mobile user terminals and conventional terrestrial networks such as public switched telephone networks (PSTNs) and public land mobile networks (PLMNs). One network known as the IRIDIUM™ satellite cellular system is described in EP-A-0 365 885 and US Patent No. 5 394 561 (Motorola), which makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km. Reference is directed to the ICO™ satellite cellular system described for example in GB-A-2 295 296. With this system, the satellite communications link does not permit communication between adjacent satellites. Instead, a signal from a mobile user terminal such as a mobile handset is directed firstly to the satellite and then directed to a ground station or satellite access node (SAN), connected to conventional land-based telephone networks. This has the advantage that many components of the system are compatible with known digital terrestrial cellular technology such as GSM. Also simpler satellite communication techniques can be used than with a LEO network. Reference is directed to "New Satellites for Personal Communications", Scientific American, April 1998, pp. 60 - 67, for an overview of LEO/MEO satellite networks.

In satellite communications networks, ground stations are located at different sites around the world in order to communicate with the orbiting satellites and local PLMNs. In the ICO™ system and others, a visitor location register is associated with each of the satellite ground stations to register locally the individual user terminals. The visitor location registers communicate with a home location register which may be part of the satellite network, or may be part of a PLMN, so as to permit a subscriber to roam from the PLMN to the satellite network.

The satellites have a power capacity which is limited by the size of their batteries and solar cells and so in order to optimise resources, it is desirable in satellite networks to reduce the link margin of traffic channels to the individual user terminals, below the levels conventionally used in terrestrial mobile networks. Our EP-A-0 888 024 discloses a satellite mobile telecommunication system in which the link margin for traffic channels is set at a relatively low level e.g. 8db but in order to achieve satisfactory paging at the initiation of a call, a relatively high link margin is used for the signals concerned, for example 18db. With this arrangement, the difference in the link margin gives rise to the problem that the user terminal may respond to a paging signal and start ringing but, when the user answers the call, transmission quality may be so poor that speech communication cannot be established satisfactorily at the lower link margin because the user is located in a location where there is no direct line of sight communication with the satellite concerned i.e. away from a window or in a vehicle which partially screens the signals.

A solution to this problem is disclosed in EP-A-0 888 024 ***supra***. Call initiation signals are transmitted to the user terminal with a first relatively high link margin in order to achieve satisfactory paging. A determination is made of the transmission quality using signal communication with the user terminal at the relatively high link margin. If it is determined that the transmission quality is poor and would not support the traffic channel at a lower link margin, an indication is provided to the user terminal to allow the user to try and improve the link margin for example by moving towards the window or otherwise moving to a location in which the line of sight communication with the satellite is not subject to such severe screening or fading. If the transmission quality improves within a predetermined time, due to the terminal being moved to a better location, the call is accepted and a traffic channel is set up for the call at the relatively low link margin. However, if the transmission quality does not improve as a result of actions taken by the user, the call initiation is terminated. The user is thus given a predetermined time, set by a timer to take actions to improve the transmission quality e.g. by moving towards the window. However, a consequence is that the time taken to establish a call is longer than with a conventional terrestrial mobile phone system, which undesirably uses system resources in the satellite network.

In some situations, no action can be taken at the user terminal to improve the transmission quality for an incoming call. For example, the user terminal may be fixed or only partially mobile. The terminal may in this instance comprise a telephone booth, such as a payphone in a fixed location or semi-mobile on a boat or train in which case it would not be possible for the user to move it to a different location to improve transmission quality. Also, when used in an automobile, the mobile user terminal may be fitted to a cradle in the automobile for hands-free operation. It will not be possible to move the user terminal readily from the cradle to improve signal quality, without negating the hands-free advantage provided by using the cradle. Thus, in both of these situations, if the incoming call signal quality is not sufficient to support the relatively low link margin for the traffic channel, the system resources are used up while the call establishment procedure determines the signal quality, provides the user with a time to rectify the situation, then finds that no rectification has been carried out and thereafter terminates the call.

The present invention provides a solution to this problem.

The present invention is characterised by providing a declining signal when the user terminal is in a situation where its user may not try to improve the link margin, and transmitting a call release signal to terminate the call initiation in response to the declining signal when said determination indicates that the traffic channel cannot be supported at the second link margin.

The user terminal may comprise a mobile telephone handset for use hands-free in a cradle, and the declining signal is provided selectively when the handset is placed in the cradle.

The user terminal may also be mounted in a fixed location relative to an enclosure around it, and the declining signal is produced continuously during operation of the user terminal.

The determination of transmission quality may be carried out by determining the signal strength of a cell broadcast signal received by the user terminal, transmitted to achieve said first relatively high link margin, which contains data concerning its transmission, and repeatedly computing from said data and the signal strength whether the traffic channel can be supported at said second relatively low link margin.

The outcome of the determination may be transmitted towards a remote location from which the call is being initiated.

The method may include receiving a call setup signal and, in response thereto, either transmitting a call confirmed signal in the absence of the declining signal or a call release signal in the presence of the declining signal.

The indication to the user to try to improve the link margin may be provided in response to the setup signal if it is determined that the traffic channel cannot be supported at the second link margin.

The user terminal may be for use with a satellite network.

The invention also includes a user terminal for a cellular mobile telecommunications network in which call initiation signals are transmitted to the user terminal with a first relatively high link margin and a traffic channel for the call is thereafter opened with a second relatively low link margin, the user terminal including receiver means to receive signals transmitted thereto means responsive to signals received by the receiver means for making a determination of transmission quality using signals of said first relatively high link margin, and if the determined transmission quality indicates that the traffic channel cannot be supported at said relatively low link margin, providing an indication to the user of the terminal to allow the user to try to improve the link margin, whereby the call initiation is terminated if the determined transmission quality does not improve thereafter to support the second link margin for the traffic channel, means for providing a declining signal when the user terminal is in a situation where its user may not try to improve the link margin, and transmitting means for transmitting a call release signal to terminate the call initiation in response to the declining signal when said determination indicates that the traffic channel cannot be supported at the second link margin.

The invention also provides a base station for a cellular mobile telecommunications network, comprising circuitry to transmit call initiation signals to a user terminal with a first relatively high link margin and thereafter a traffic channel for the call with a second relatively low link margin, wherein a determination of transmission quality is made using signals of said first relatively high link margin and if the determined transmission quality indicates that the traffic channel will not support said relatively low link margin, an indication is provided to the user of the terminal to allow the user to try to improve the link margin, the call initiation is terminated if the determined transmission quality does not improve thereafter to support the second link margin for the traffic channel, and a declining signal is provided at the user terminal when it is in a situation where its user may not try to improve the link margin, receiving means for receiving a call release signal from the user terminal in response to the declining signal when said determination indicates that the traffic channel cannot be supported at the second link margin to terminate the call initiation, and means responsive to the received call release signal to terminate initiation of the call.

The base station may include a timer to time a predetermined period in response to a call confirmed message received from the user terminal, the receiver being configured to receive report signals indicative of whether the traffic channel can be supported at said second relatively low link margin, and including processing circuitry to terminate the call initiation unless the report signals indicate prior to time-out of the timer that the traffic channel can support the second link margin, or prior to the time-out in response to the call release signal being received.

In order that the invention may be more fully understood an embodiment thereof will now be described by way of example with reference to the accompanying drawings, in which:
Figure 1 is a schematic diagram of a satellite telecommunications system together with a local, land-based mobile telecommunications system, in accordance with the invention;
Figure 2 is a schematic diagram of the spot beam pattern produced by one of the satellites on the earth;
Figure 3 is a schematic frequency/time diagram showing time slots for the transmission scheme;
Figure 4 is a schematic diagram of the circuits of satellite 3a;
Figure 5 is a schematic diagram of the cell pattern produced by the spot beams of satellite 3a;
Figure 6 is a schematic diagram of a mobile user terminal;
Figure 7 is a schematic block diagram of the circuits of the user terminal shown in Figure 6;
Figure 8 illustrates signal exchange between the user terminal and the satellite base station for a mobile terminated call;
Figure 9 is a schematic block diagram of signal power monitoring carried out at the user terminal;
Figure 10 is a schematic flow diagram of a call categorisation procedure (step S9) shown in Figure 8;
Figure 11 is a schematic flow diagram of a timing procedure (step S11) shown in Figure 8;
Figure 12 is a schematic diagram of an automobile hands-free configuration; and
Figure 13 is a schematic diagram of a telephone booth for use with the satellite network.

### Overview of network

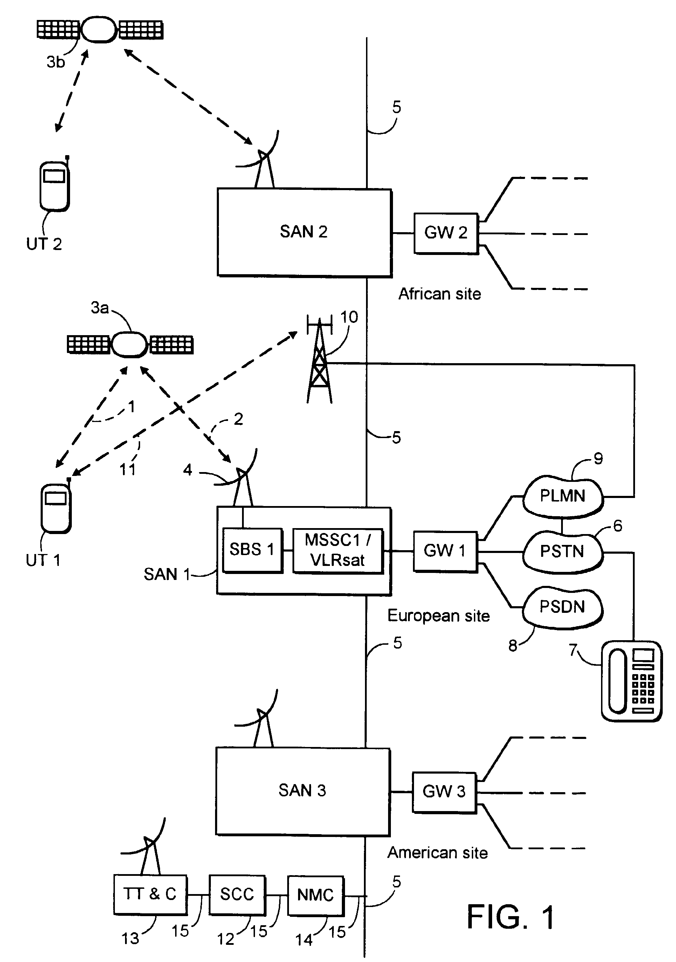

Referring to Figure 1, a schematic block diagram of a satellite mobile telecommunications network is shown corresponding to the ICO™ network. A mobile user terminal UT 1 in the form of a mobile telephone handset can communicate on a radio channel over a communication path 1, 2 via an earth orbiting satellite 3a with a land-based satellite access node SAN 1. As shown schematically in Figure 1, SAN 1 is provided with a dish antenna arrangement that includes antenna 4 which can track the orbiting satellite 3a.

A number of the satellite access nodes SAN 1, 2, 3, etc are connected together to form a backbone network 5, which is connected through a number of gateways GW 1, 2, 3, etc to conventional land-based telephone networks. For example, the gateway GW 1, is connected to a land-based public switch telephone network 6 (PSTN), which permits connection to be made to a conventional telephone set 7. The gateway GW1 is additionally connected to a public switched data network 8 (PSDN) and a public land mobile network 9 (PLMN). Each of the gateways GW 1, 2, 3 may comprise existing International Switching Centres (ISCs) or mobile switching centres (MSCs) of the type used in GSM mobile networks.

As shown in Figure 1, the handset UT 1 is a dual mode device which can also communicate with the conventional land-based mobile network 9, that is shown schematically to include a transceiver station 10 which establishes a duplex link 11 with the user terminal UT 1. In this example, the network 9 is a GSM network. Thus the user can for example roam to the satellite network when out of range of the network 9.

The satellite network is designed to provide world-wide coverage and the satellite 3a forms part of a constellation of satellites, which may be arranged in several orbits. The satellites may be arranged in a MEO constellation, for example with an orbital radius of 10,355 km, although the invention is not restricted to a particular orbital radius. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing more than one concurrent or diverse communication path to the user terminal from a particular SAN. Additional satellites may be included in the constellation in order to provide redundancy and further diversity.

In this embodiment, two satellites 3a, 3b of the constellation are shown in a common orbit and the satellites are tracked by the antenna arrangement 4 of each SAN. The antenna arrangement 4 for each SAN may for example include five dish antennas to track satellites individually, although only one dish is shown for the SANs, in order to simplify the drawing.

The SANs are spaced around the earth in order to provide continuous coverage. In the example shown, SAN 1 may be located in Europe whereas SAN 2 may be located in Africa, SAN 3 in America and other SANs may be located elsewhere.

SAN 1 consists of a satellite base station SBS 1 which is coupled to the dish antenna arrangement 4 for tracking the satellites, the SBS 1 including transmitter and receiver circuits with amplifiers, multiplexers, de-multiplexer and codecs, together with signal processors. A mobile satellite switching centre MSSC 1 is coupled to SBS 1 and includes a satellite visitor location register VLR_{SAT} 1. MSSC 1 couples communication signals to the backbone network 5 and to the SBS 1, so as to allow individual telephone calls to be established through the backbone network 5 and the duplex communication link 1, 2 via the satellite 3a, to the mobile terminal UT 1. Also, MSSC 1 is connected to the gateway GW 1 so as to provide a connection to the land based networks 6, 8 and 9. It will be understood that all the SANs are of similar construction with a respective VLR_{SAT} to maintain a record of the subscribers registered, namely the identity of each user that is making use of the SAN 1 for signal communication. The various VLRs_{SAT} in the SANs communicate with an HLR_{SAT} (not shown), which maintains a record of all of the subscribers to the user terminals together with customer information. In practice, the HLR functionality is distributed to the SANs.

In Figure 1, the SAN 2 is shown communicating with user terminal UT 2 via satellite 3b. For further details of the network, reference is directed to GB-A- 2 295 296 and EP-A-0 869 628.

The satellites 3a, 3b are in non geo-stationary orbits and comprise generally conventional hardware such as the Hughes HS 601. They may include features disclosed in GB-A-2 288 913.

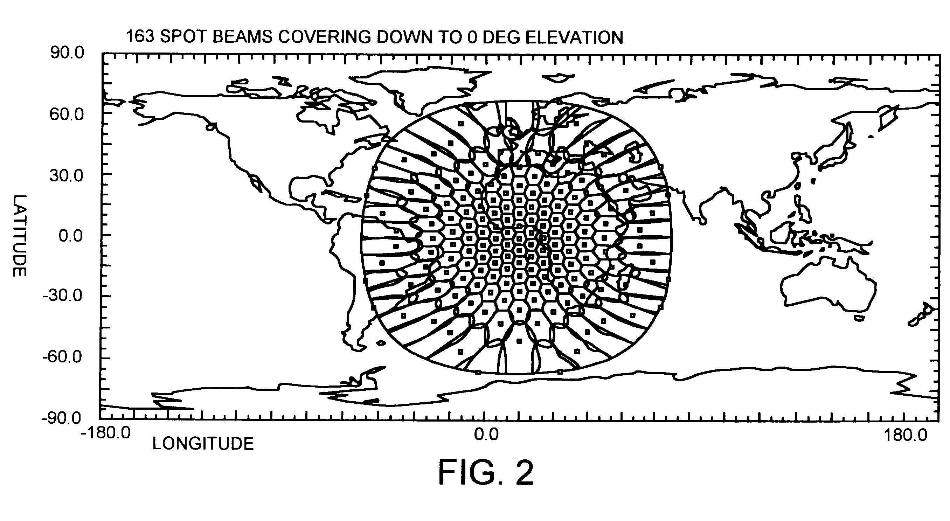

Each satellite 3a, 3b is arranged to generate an array of radio beams each with a footprint on the earth beneath the satellite, each beam including a number of different frequency channels and time slots as described in GB-A-2 293 725. The beams thus provide adjacent cellular areas which correspond to the cells of a conventional land-based mobile telephone network. In this example, each satellite produces a footprint of 163 spot beams on the earth in a fixed pattern as shown in Figure 2, which sweeps over the earth's surface as the satellite moves in its orbit.

The satellites are controlled by means of a satellite control centre 12 (SCC) and a telemetry tracking and control station 13 (TT&C), which are connected to a network management centre 14 (NMC) through a digital network 15 that is coupled to the backbone network 5. The SCC 12 and the TT&C 13 control operations of the satellites 3a, 3b, e.g. for setting the general transmission power levels and transponder input tuning, as directed by the management centre 14. Telemetry signals for the satellites 3a, 3b are received by the telemetry tracking and control station 13 and processed by the satellite control centre 12 to ensure that the satellites are functioning correctly.

### Channel Configuration

During a telephone call, each of the user terminals communicates with a respective SAN via the satellites. A full duplex communication path is provided between the UT and the SAN. As referred to herein, communication from the SAN to the UT via the satellite is referred to as a "downlink", and communication directed from the UT via the satellite to the SAN is referred to as an "uplink". The signals may travel over diverse paths between UT 1 and SAN 1 via satellite 3a or 3b or both of them concurrently.

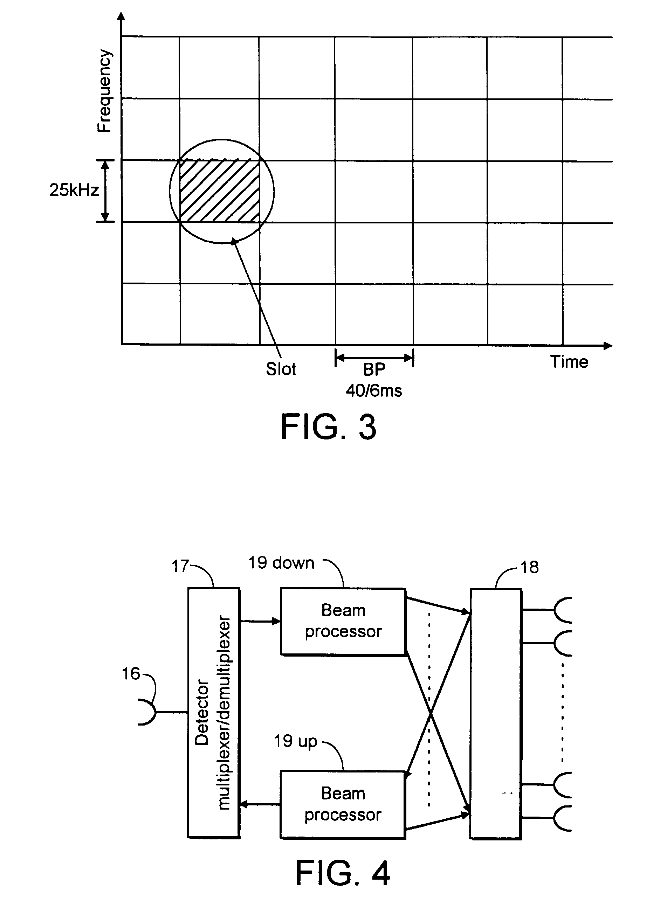

The general configuration of the transmitted signals is similar in some respects to those used for conventional GSM transmissions in a PLMN and makes use of a frequency diverse time division multiple access (TDMA) scheme. The basic unit of transmission between the SAN and UT is a series of about 100 modulated digital symbols, which is referred to as a burst. Bursts each have a finite duration and occupy a finite part of the radio spectrum. Thus, they are sent in time and frequency windows which are referred to as slots. The slots are positioned e.g. every 25kHz and recur in time every 40/6 ms (6.667ms). The duration of each slot is referred to as a burst period or BP. A graphical representation of a slot in the time and frequency domain is shown in Figure 3.

The signal transmission scheme includes channels for providing communication between the UTs individually and one of the SANs via a satellite, together with a number of common channels for all UTs within the cell defined by a particular satellite spot beam. The configuration of some of the signal channels will now be described in more detail.

### Individual Channels

### TCH/SA CCH

For speech transmission, data is sent on an individual traffic channel TCH. Each TCH is provided with a slow rate associated control channel or SACCH. Each TCH consists of one slot every 6 BP and comprises a cycle of 25 slots. The SACCH is multiplexed in blocks each consisting of 12 consecutive slots. Two SACCH blocks are transmitted for every 25 slot cycle of the TCH and the remaining slot is used to transmit a timing reference so as to make up a 25 slot SACCH message for each 25 slot cycle of TCH. The TCH/SACCH is transmitted when the UT is in dedicated mode i.e. during a call.

It will be appreciated that with this configuration, 6 TCHs can be interleaved due to the fact that each TCH consists of a slot every 6 BP. The resulting interleaved structure thus provides a frame of 6 TCHs every 6 BP. In contrast to GSM, no frequency hopping is used from slot to slot of the channel.

### Common Channels

In addition to the channels TCH/SACCH for the individual UTs, a number of common channels are provided for all UTs within each cell corresponding to one of the satellite's spot beams, which will now be described in more detail.

### BCCH

A broadcast control channel BCCH is broadcast from the satellite to all UTs within a particular cell. The BCCH provides information which identifies the cell to the UT, which is received by the UT in idle mode i.e. when no call is being made. As each cell has its own BCCH, the relative signal strengths of the BCCHs at the UT can be used to determine which cell is to be used for TCH/SACCH communication with the UT. The BCCH includes messages indicating the transmission power of the BCCH signal to enable the UT to compute transmission losses and hence whether the transmission configuration will support NP mode, as explained in more detail hereinafter.

System information concerning operational parameters for the UTs of a particular cell is transmitted to the UTs in the cell in BCCH messages. Each BCCH message consists of a number e.g. 4 slots, and is transmitted periodically e.g. every 100 BP.

### PCH/AGCH

The common channels also include a downlink paging logical channel PCH. This is used to transmit paging messages to a UT, for example to alert the user of the UT to an incoming call. Also an access grant logical channel AGCH indicates to the UT a channel allocated by the network, either a signalling only TCH described previously, or a SDCCH/SACCH , in order to receive the incoming call, , as described hereinafter. The PCH consists of e.g. 1 to 10 slots every 25 BP and the AGCH consists of e.g. 2, 4, 6, 8, 10 or 12 slots every 25 BP.

### SDCCH

This is a common downlink channel through which authentication and cipher procedures are carried out prior to commencement of a call. The SDCCH consists of e.g. 2 or 12 slots every 25 BP for nominal or medium penetration respectively (to be described in more detail hereinafter). The SDCCH has an associated SACCH.

### HPN

In the ICO™ network, an additional high penetration notification (HPN) channel is provided on the downlink for paging in the event that PCH paging is unsuccessful, for example when the reception of the user terminal is partially screened by buildings or the like. Reference is directed to our WO-A-98/23045 in which the HPN system is described in more detail.

### RACH

In addition to these downlink common channels, there is an uplink common channel which allows UTs within a cell to transmit access requests to the network, when it is desired to make a call from the UT. These requests thus occur essentially randomly in time and the channel is accordingly called the random access channel RACH. The RACH consists of e.g. of 2 slots every 3, 4 or 5 BP.

When a call is initiated from the UT, a RACH transmission is made by the UT in order to request a TCH/SACCH for the call from the SAN, and the UT then listens to all AGCH messages from the SAN/satellite to determine details of the channel to be allocated for the call. The AGCH messages comprise two bursts in this example. For calls initiated from the network via the SAN, the UT listens for PCH messages which signify the occurrence of an incoming call, and in response to receiving a PCH message, makes a RACH transmission to request TCH/SACCH as just described. The UT listens to 1 burst every 50, 150, 200, 300, 400 or 600 BPs in order to locate PCH messages.

The common channels are transmitted on beacon frequencies for the cell concerned such that BCCH is transmitted on frequency f1, PCH/AGCH on f2 and RACH on f3. Adjacent cells have different beacon frequencies to distinguish them from one another. In practice, the beacon frequencies may themselves cycle between different values within a respective allocated frequency slot to provide a cw frequency acquisition portion at a first frequency during a first burst period followed by a data burst at a second frequency during a second burst period.

Information concerning the configuration of these variable format common channels is transmitted to the UTs of a particular cell as system information in the BCCH messages in order to allow the operating parameters of the UTs to be set accordingly. Thus, for example, the configuration of the RACH and how the UT should listen to the slots of the PCH are sent to the UTs in the BCCH messages in order to allow the UTs to listen to the channels.

These channel configurations, together with other operating parameters for the UTs in the cell can change with time and data concerning the parameters are sent as system information to the UTs in the BCCH messages from the SANs.

### Nominal/medium/high penetration

In order to optimise satellite power consumption, the individual call traffic channels TCH/SACCH are transmitted with a relatively low link margin e.g. nominally 8db, referred to herein as nominal penetration (NP). The common channels referred to hereinbefore (apart from HPN) are transmitted to achieve a higher nominal link margin e.g. 18db. These signals are described herein as achieving medium penetration (MP). HPN signals described above are transmitted to achieve an even higher link margin referred to as high penetration (HP).

### Satellite

A schematic diagram of the major signal processing components of the satellite is given in Figure 4. Signals transmitted from one of the SANs are received by antenna 16 and directed to a detector/multiplexer/demultiplexer circuit 17. It will be understood that the signals transmitted from the SAN to the satellite contains a large number of TCH/SACCHs that are to be directed to individual UTs by the satellite. To this end, the satellite includes an array 18 of antennas that produce individual spot beams (for example 163) that correspond to a cellular configuration as previously described. A beam forming processor circuitry configuration 19_{down} receives the various TCH/SACCHs that are demultiplexed by circuit 17 and assembles them into multiplexed signals directed on 163 outputs to the spot beam antennas 18. The circuitry 19_{down} is also configured to include the downlink common control channels for each of the spot beams, including the BCCH, PCH and AGCH, on the basis of data transmitted to the satellite from the SAN.

For signals on the uplink from the individual UTs to the SAN, the various transmissions including RACH are received by the spot beam antennas 18 and directed to processing circuitry 19ᵤₚ which combines the various channels and passes them to the multiplexer configuration in circuit 17 for transmission through the antenna 16 to the SAN.

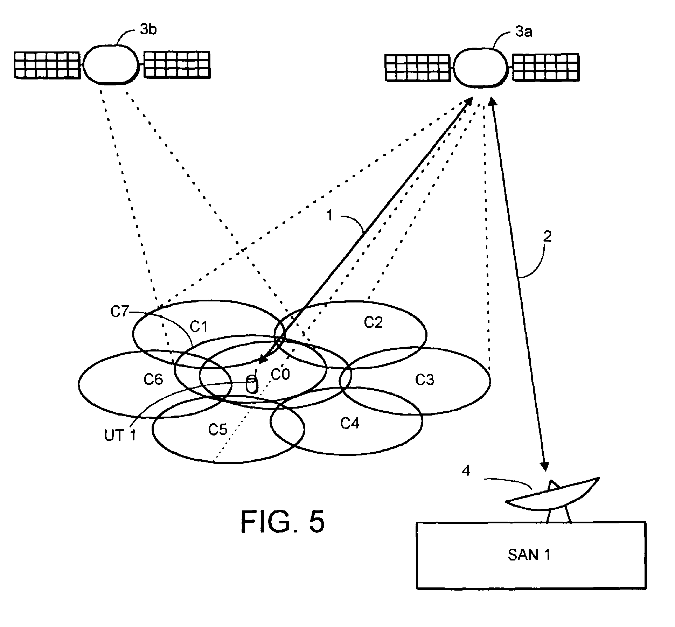

An example of cells C0 - C6 produced by the footprints of seven of the 163 spot beams from antenna 18 is shown schematically in Figure 5. The user terminal UT 1 lies within cell C0 but also can monitor the BCCHs of adjacent cells C1 - C6 and cells produced by other satellites that are within range for example cell C7 produced by satellite 3b.

The SAN 1,2 to satellite 3a, 3b uplinks are located in a frequency band in the region of 5 GHz and the corresponding downlinks are in the region of 7 GHz. The satellite 3a, 3b to UT 1,2 downlinks are in the region of 2.1 GHz and the corresponding uplinks are in the region of 1.9 GHz, although the invention is not restricted to these frequencies.

It will be understood that the foregoing description of the satellite circuitry is schematic and for further details, reference is directed to GB-A-2 288 913 ***supra.***

### User terminal (UT 1)

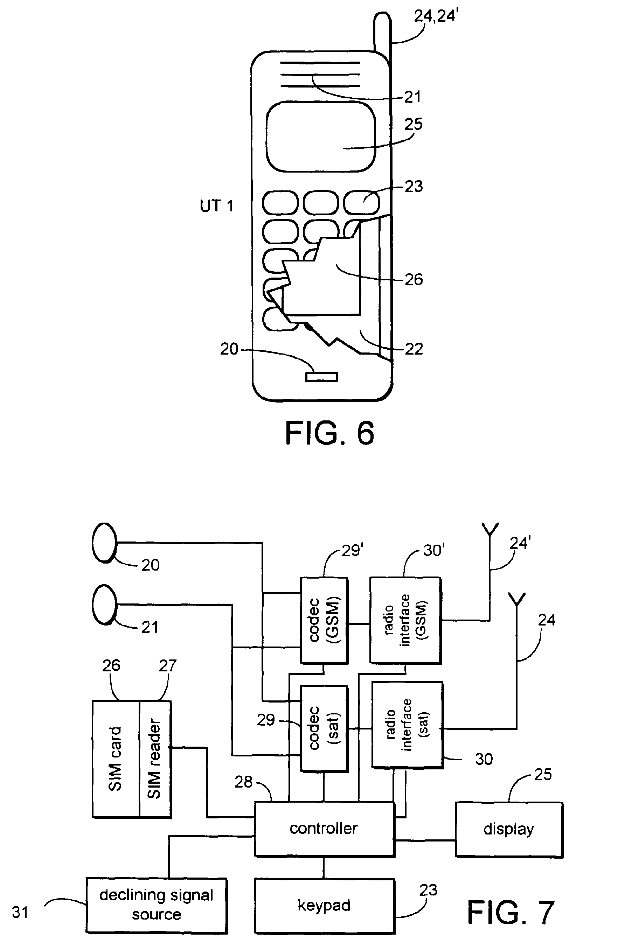

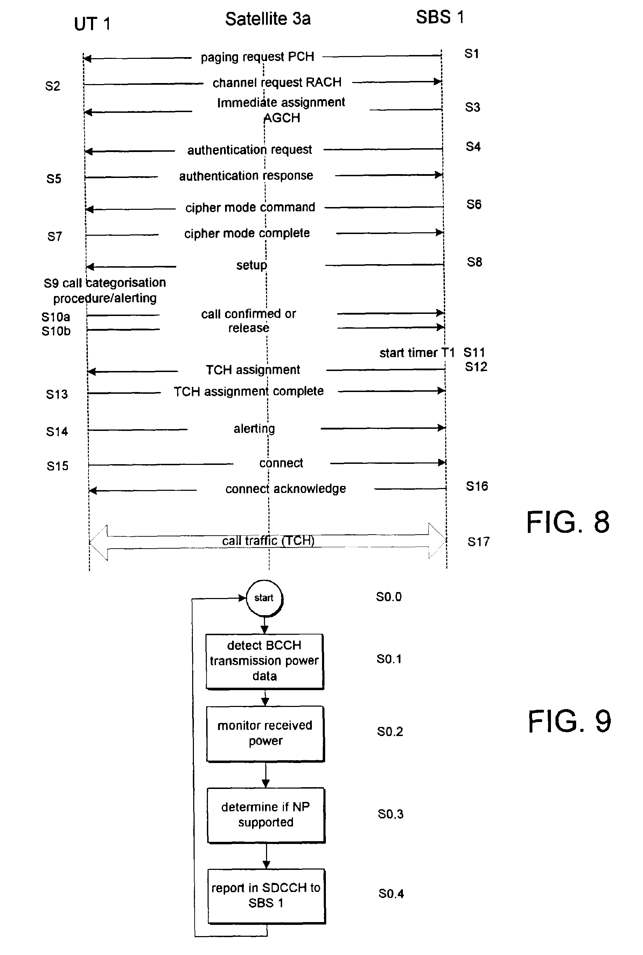

The mobile user terminal UT 1 is shown in more detail in Figures 6 and 7. It comprises a hand held device which is generally similar to a mobile telephone used for conventional terrestrial GSM networks. It is powered by a rechargeable battery (not shown) and is configured to operate either with the local terrestrial cellular network or to roam to the satellite network. Thus, in the example shown in Figure 1, the mobile handset UT 1 can operate either according to a land-based GSM protocol or according to the satellite network protocol. As shown in Figure 6, the handset comprises a microphone 20, an earpiece 21, a battery 22, a keypad 23, antennas 24, 24' and a display 25. The handheld unit UT 1 also includes a subscriber identification module (SIM) smartcard 26. The SIM contains subscriber specific information for amongst other things authenticating the user when a call is made.

The circuit configuration of the handset UT 1 is shown in block diagrammatic form in Figure 7. The SIM card 26 is received in a SIM card reader 27 coupled to a controller 28, typically a microprocessor. The microphone and loudspeaker 20, 21 are coupled to first and second codecs 29, 29' coupled to conventional radio interfaces 30a, 30b connected to the antennas 24, 24' so as to transmit and receive communication signals, in a manner well known per se. The handset is capable of dual mode operation, with the codec 29, radio interface 30 and antenna 24 being used with the satellite network, and corresponding circuits 29', 30' and 24' being used with the GSM PLMN 9.

A declining signal source 31 to be described in more detail hereinafter, provides a declining signal to controller 28 in situations in which the user cannot take steps to improve signal reception at the user terminal when the TCH coverage is adjudged not to support NP mode. This will be explained in more detail hereinafter.

### Location Updating

The user terminal, when used with the satellite network can perform a location updating function to provide an estimation of the location of the terminal relative to the earth's surface and to convey the location information to the visited MSSC SAN for use in network initiated access. This is carried out by the SAN measuring the propagation delay and Doppler shift for the signals received and optionally supplemented by measurements made at the UT of differential propagation delay and differential forward link Doppler from two or more of the satellites 3 at the user terminal UT 1 using its controller 28. In the latter case, the resulting measurement positional data is then transmitted from the user terminal to the SAN via satellite 3a. In both cases, the SAN compiles this information and forwards it for storage in VLR_{SAT}. This process is described in more detail in our GB-A-2 321 812.

### Service provision

The described network can provide service to customers in a number of different ways. For example, communication may be provided from UT 1 to UT 2 using the satellite backbone network 5 shown in Figure 1. Alternatively, telephone communication can be established between the telephone set 7 and UT 1 either via SAN 1 and satellite 3a, or, through PLMN 9, antenna 10 and link 11. For a further description of service options, reference is directed to our EP-A-0869628.

### Mobile terminated call

A method of setting up of a mobile terminated call e.g. from telephone 7 to UT 1, will now be described with reference to Figures 8 to 11.

When a call is to be made from telephone set 7 to UT 1, the call is routed by the various ground based networks to the SAN with which UT 1 is currently registered. In this case, UT 1 is registered with MSSC 1/VLRₛₐₜ in SAN 1.

Referring to Figure 8, SBS 1 in SAN 1, in response to the incoming call, transmits a paging request on the paging channel PCH, to UT 1 via satellite 3a, as shown at step S1. At step S2, UT 1 sends a channel request on RACH back to SBS 1, in order to request a channel for the call. At step S3, SBS 1 transmits details of the assigned channel in AGCH, to UT 1.

An authentication procedure is then carried out, in order to authenticate the mobile subscriber. The authentication procedure generally follows the approach taken in GSM and for further details reference is directed to our EP-A-0 883 318. As known in the art, the authentication procedure involves identifying the subscriber identity as recorded on the SIM card 26 in UT 1 (Figure 7) with corresponding information held associated with the HLR of the satellite network and copied to the VLR concerned. In Figure 8, the authentication procedure is illustrated schematically in terms of an authentication request step S4 and a corresponding authentication response step S5.

Assuming that authentication is successful, a cipher is set up for the individual call, for example using GSM cipher algorithm A5 in a manner known ***per se.*** For a fuller description, reference is directed to "The GSM System for Mobile Communications M. Mouley & M.-B Paulet, Cell & Sys [ISBN 2-9507190-0.7] pp 248-249. The establishment of a cipher mode for the session is shown schematically in Figure 8 by steps S6 and S7.

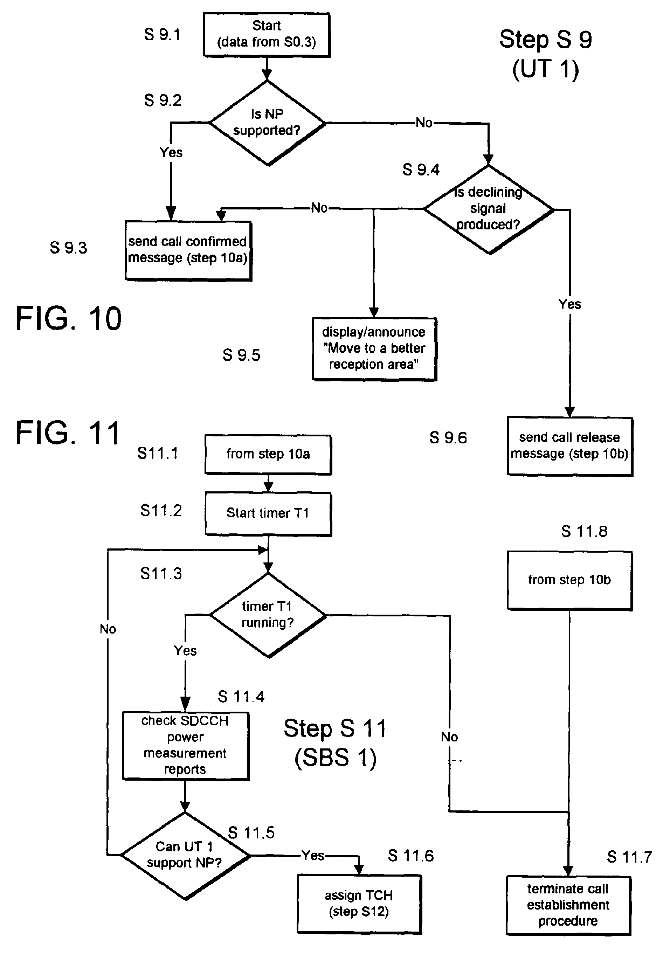

SBS 1 then, at step S8, sends a set up signal on the downlink to UT1. This initiates a call categorisation procedure step S9 and a corresponding response step S10, which will now be described in more detail with reference to Figures 9 and 10.

As previously explained, the paging signals and the BCCH are transmitted in MP mode whereas during a call, the traffic channel TCH/SACCH is transmitted in NP mode in order to save power. Thus, at commencement of a call, a determination is made as to whether the communication paths can support a traffic channel in NP mode. It will be understood that the higher power MP signals may be received satisfactorily but this in itself does not indicate necessarily that NP mode can be supported.

Referring to Figure 9, during dedicated mode, UT 1 continuously reviews data received from the BCCH to determine whether the user terminal will support NP mode. As previously explained, the BCCH contains power transmission data, which indicates the power at which the spot beam which defines the cell, is being transmitted. This data is detected from the BCCH at step S0.1. Also, UT 1 monitors the power of the received BCCH signals. By comparing the actual power of the received signal with the data relating to the transmitted power obtained at step S0.1, the UT 1 can compute at step S0.3 the transmission power loss at a particular time and hence can estimate whether NP can be supported. It will be understood that the power loss will occur due to signal fading or partial shading due to buildings or other enclosures or shadowing elements around the UT.

The outcome of step S0.3 constitutes a binary decision, namely NP is estimated to be supported or not supported on the downlink. This data is reported back to SBS 1 on the uplink at step S0.4, in the SACCH associated with SDCCH allocated to the system at step S3 (Figure 8). The routine shown in Figure 9 then repeats so that data concerning whether NP can be supported on the downlink is continuously fed back to SBS 1 in order to take account of fading or other time varying transmission power losses that occur in use. A similar measurement process (not shown) is carried out at SBS 1 for signals received on the uplink, and a decision is taken at the SBS based on both the data, as to whether NP can be supported, as explained in more detail hereinafter.

Also, the user terminal UT 1 makes use of the data concerning whether NP can be supported, obtained at step S0.3. Referring to Figure 10, the controller 28 (Figure 7) of the user terminal receives the data from step S0.3, at step S9.1 and, at step S9.2 determines whether NP can be supported. If it can, a call proceeding message is sent at step S9.3, corresponding to step 10a of Figure 8. This signals to SBS 1 that the call initiation procedure can continue.

However, if, at step S9.2, it is found that NP is not supported, a check is made at step S9.4 to see whether a declining signal is being produced by the declining signal source 31 shown in Figure 7. The purpose of this step will be described in more detail hereinafter. For the time being, it will be assumed that no declining signal is being produced. In the situation that NP cannot be supported, the call confirmed signal is still sent at step S9.3 as previously described and in addition, an indication is given to the user that an incoming call is to be expected and that the user should move to a better reception area i.e. to instruct the user to move to a location where the reception of signals for the satellite is better, so as to support NP. The message to the user may constitute a visual display on the liquid crystal panel 25 shown in Figure 6 in combination with a characteristic audio "bleep". However, other messages can be envisaged, for example using a voice synthesiser.

SBS 1 then allows the user a period of time to move to a better reception area. This period is defined by a timer T1, at step S11 shown in Figure 8. The procedure will now be described in more detail with reference to Figure 11. When the call confirmed signal transmitted at step S10a is received at step S11.1 shown in Figure 11, the timer T1 of SBS 1 is started, at step S11.2. If the user moves to a better reception area whilst the timer T1 is running, so that NP can be supported, this is signified in step S0.3 shown in Figure 9 and reported back to SBS 1 in step S0.4 in the SDCCH. Referring to Figure 11, the status of the timer T1 is checked at S11.3 and if it is running, the latest power measurement signal received on SDCCH is combined with measurements made on the uplink at the SBS and checked at step S11.4. If it is found at step S11.5 that UT 1 can support NP, i.e. the user has successfully moved to a better reception area within the time period set by timer T1, then, the procedure moves to step S11.6 which starts an assignment of a TCH./SACCH at NP for the call. This is illustrated as step S12 in Figure 8.

However, if at step S11.5, it is found that UT 1 cannot support NP, the routine loops back to step S11.3 until either step S11.4 indicates successful acquisition of NP or, the timer T1 times out. If NP is not acquired within the time period set by timer T1 i.e. the user has not moved to a better location within the period of timer T1, it is assumed that a traffic channel TCH for the call cannot be satisfactorily established in NP and so the process moves to step S11.7 at which the call establishment procedure is terminated and a message is transmitted back to telephone set 7 to indicate an unsuccessful call attempt.

Referring again to Figure 8, when the TCH assignment of step S12 is completed, UT 1 transmits at step S13, a message to SBS 1 that indicates that the traffic channel assignment has been completed.

The controller 28 of UT 1 then initiates a ringing tone for the user to indicate the occurrence of an incoming call. Additionally, at step S14, an alerting signal is sent back to SBS1 to indicate the occurrence of the ringing tone.

When the user takes the user terminal UT 1 off hook to commence call traffic e.g. by pressing a button on the keypad 23 (Figure 7), a connect signal is sent at step S15 to SBS 1 on the uplink. A corresponding acknowledgement is sent on the downlink by SBS 1 at step S16. Then, bidirectional call traffic commences e.g. speech or data, as shown schematically at step S17. It will be understood that whilst the previously described paging signals are transmitted in MP, the subsequent call traffic (TCH) shown at step S17 is in NP and the previously described procedures will have determined that the lower link margin of NP can be supported.

The described procedure has the advantage of allowing the user terminal to be moved to a better reception area in the event that NP cannot be supported initially. However, it has the disadvantage that if NP cannot be supported, system resources are tied up whilst the timer T1 runs for its full period, before the call establishment procedure is terminated at step S11.7.

In accordance with the invention, it has been appreciated that there are some situations in which the user terminal cannot be moved in order to obtain improved reception for an incoming call.

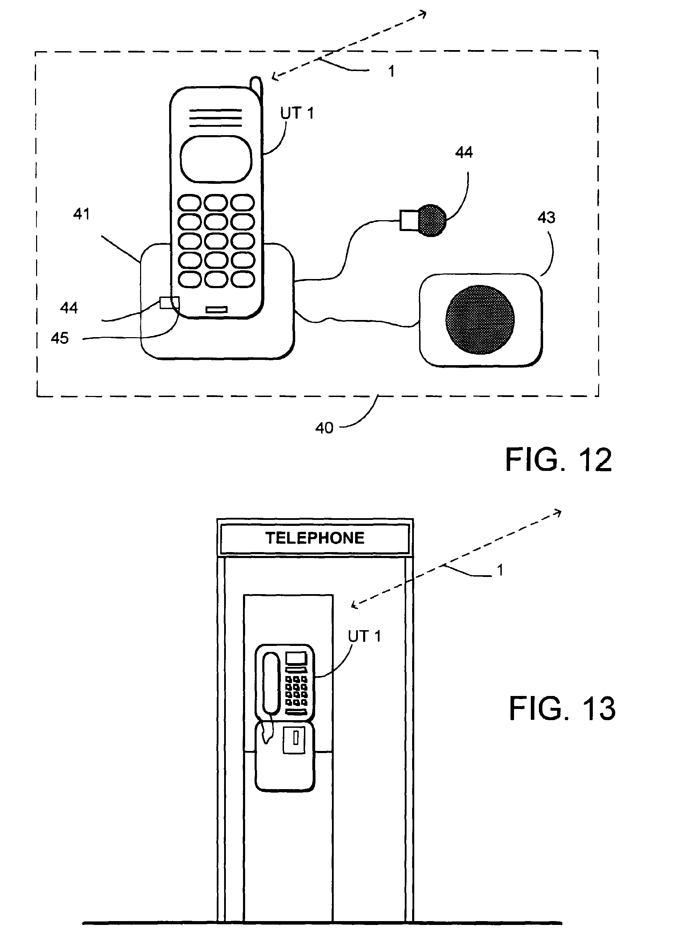

For example, referring to Figure 12, UT 1 may comprise a mobile handset, which received in a hands-free adaptor in an automobile with a passenger compartment shown schematically by dotted outline 40. The hands-free kit comprises a cradle 41 that receives the handset UT 1, a microphone 42, and a loudspeaker 43. As known in the art, the cradle 41 includes a connector which connects the microphone 42 and loudspeaker 43 to the handset to permit hands-free operation. The handset UT 1 and cradle 41 include co-operating parts 44, 45 of Hall-effect switch which detects the presence of the handset in the cradle 41. The part 45 of the switch that is mounted within the user terminal UT 1 acts as a controller for the declining signal source 31 shown in Figure 7, so that when the handset is received in the cradle 41, the declining signal is supplied to the controller 28 shown in Figure 7.

There are other examples of user terminals which cannot be moved to improve signal reception. In Figure 13, a satellite payphone is shown in a booth in a fixed e.g. on the earth or semi-fixed location e.g. on a boat or in a train. Clearly, the user cannot readily move the user terminal to improve signal reception. Alternatively, it may be decided manually by the user in response to his current circumstances, e.g. if he or she determines his is not in a position to accept the call. This can be carried out by manually operating a predetermined key on the key pad 23, to decline all incoming calls. In an example of Figure 13, the declining signal source of Figure 7 comprises a fixed voltage produced by an internal voltage source, to provide the declining signal.

Thus, the declining signal signifies a situation in which the user may not move the user terminal to a better reception location in response to an incoming call in order to acquire NP mode, when the transmission path is adjudged not support NP mode for the traffic channel. In this situation, the procedures shown in Figures 8 to 11 are modified in order not to wait for timer T1 to time-out.

Referring to Figure 10, in the event that NP is not supported, as judged at step S9.2, and in the event that the declining signal is being produced (step S9.4) a call release message is generated at step S9.6, which is transmitted at step SlOb shown in Figure 8 from UT 1 to SBS 1.

Figure 11 illustrates how the call release message sent at step S10b is processed. It is received by SBS 1 at step S11.8 and is used directly to terminate the call establishment procedure at step S11.7, without waiting for timer T1 to time-out. Thus, in the event that the user terminal cannot be moved, the timing procedure of timer T1 is overridden so as to avoid waiting for it to time-out, thereby releasing system resources earlier than otherwise, to process subsequent call attempts.

Many modifications and variations fall within the scope of the invention. For example, although the method of declining a call has been described in relation to the ICO™ system, it will be appreciated that it could be equally well applied to any of the satellite mobile telecommunications networks described in Scientific American ***supra.*** The technique could also be applied to a conventional land-based mobile telephone network, such as PLMN 9 and transmitter 10 shown in Figure 1.

## Claims

1. A method of controlling establishment of a call at a user terminal for a cellular mobile telecommunications network in which call initiation signals are transmitted to the user terminal with a first relatively high link margin and a traffic channel for the call is thereafter opened with a second relatively low link margin, wherein a determination of transmission quality is made using signals of said first relatively high link margin and if the determined transmission quality indicates that the traffic channel cannot be supported at said relatively low link margin, an indication is provided to the user of the terminal to allow the user to try to improve the link margin, and the call initiation is terminated if the determined transmission quality does not improve thereafter to support the second link margin for the traffic channel **characterised by** providing a declining signal when the user terminal is in a situation where its user may not try to improve the link margin, and transmitting a call release signal to terminate the call initiation in response to the declining signal when said determination indicates that the traffic channel cannot be supported at the second link margin.

2. A method according to claim 1 wherein the user terminal comprises a mobile telephone handset for use hands-free in a cradle, including providing the declining signal selectively when the handset is placed in the cradle.

3. A method according to claim 1 wherein the user terminal is mounted in a fixed location relative to an enclosure around it, including providing the declining signal continuously during operation of the user terminal.

4. A method according to claim 1 including selectively manually generating the declining signal.

5. A method according to any preceding claim wherein the determination of transmission quality is carried out by determining the signal strength of a cell broadcast signal received by the user terminal, transmitted to achieve said first relatively high link margin, which contains data concerning its transmission, and repeatedly computing from said data and the signal strength whether the traffic channel cannot be supported said second relatively low link margin.

6. A method according to claim 5 including transmitting the outcome of the determination towards a remote location from which the call is being initiated.

7. A method according to any preceding claim including receiving a paging signal (PCH, S1), transmitting a channel request signal (RACH, S2) in response to the paging signal, receiving a channel assignment signal (AGCH, S3), receiving an authentication request (S4) and transmitting authentication data in response thereto (S5), receiving a cipher mode command (S6) and ciphering transmitted signals in response thereto

8. A method according to any preceding claim including receiving a call setup signal (S8) and in response thereto either transmitting a call confirmed signal (S10a) in the absence of the declining signal or a call release signal (S10b) in the presence of the declining signal.

9. A method according to claim 8 including providing said indication to the user to try to improve the link margin in response to the setup signal if the traffic channel is determined not to support the second link margin (S9.5).

10. A method according to any preceding claim wherein the user terminal is for use with a satellite network and said signals are received from and transmitted towards a satellite of the network.

11. A user terminal for a cellular mobile telecommunications network in which call initiation signals are transmitted to the user terminal with a first relatively high link margin and a traffic channel for the call is thereafter opened with a second relatively low link margin, the user terminal including receiver means to receive signals transmitted thereto means responsive to signals received by the receiver means for making a determination of transmission quality using signals of said first relatively high link margin, and if the determined transmission quality indicates that the traffic channel cannot be supported at said relatively low link margin, providing an indication to the user of the terminal to allow the user to try to improve the link margin, whereby the call initiation is terminated if the determined transmission quality does not improve thereafter to support the second link margin for the traffic channel **characterised by** means for providing a declining signal when the user terminal is in a situation where its user may not try to improve the link margin, and transmitting means for transmitting a call release signal to terminate the call initiation in response to the declining signal when said determination indicates that the traffic channel cannot be supported at the second link margin.

12. A user terminal according to claim 11 wherein the user terminal comprises a mobile telephone handset for use hands-free in a cradle, including means for providing the declining signal selectively when the handset is placed in the cradle.

13. A user terminal according to claim 11 including a hands-free cradle for use with the user terminal.

14. A user terminal according to claim 11 wherein the user terminal is to be mounted in a fixed location relative to an enclosure around it, including means configured to provide the declining signal continuously during operation of the user terminal.

15. A user terminal according to claim 13 comprising a payphone.

16. A user terminal according to claim 13 or 14 mounted in a booth.

17. A user terminal according to any one of claims 11 to 16 wherein the means for making the determination of transmission quality is configured to determine the signal strength of a cell broadcast signal received by the user terminal, transmitted to achieve said first relatively high link margin, which contains data concerning its transmission, and said determining means is configured to compute repeatedly from said data and the signal strength whether the traffic channel can be supported at said second relatively low link margin.

18. A user terminal according to claim 17 wherein the transmitting means is configured to transmit the outcome of the determination towards a remote location from which the call is being initiated.

19. A user terminal according to one of claims 11 to 18 wherein the receiver means is configured to receive a call setup signal (S8) and the transmitter means in response thereto either to transmit a call confirmed signal (S10a) in the absence of the declining signal or a call release signal (S10b) in the presence of the declining signal.

20. A user terminal according to claim 19 including means to provide said indication to the user to try to improve the link margin in response to reception of the setup signal if the traffic channel is determined not to support the second link margin (S9.5).

21. A user terminal according to any one of claims 11 to 20 including means for manually selecting the declining signal to decline incoming calls.

22. A user terminal according to any one of claims 11 to 21 claim configured for use with a satellite network wherein said transmitter and receiver means are operable to transmit signals toward and receive signals from a satellite of the network.

23. A base station for a cellular mobile telecommunications network, comprising
circuitry to transmit call initiation signals to a user terminal with a first relatively high link margin and thereafter a traffic channel for the call with a second relatively low link margin, wherein a determination of transmission quality is made using signals of said first relatively high link margin and if the determined transmission quality indicates that the traffic channel cannot be supported at said relatively low link margin, an indication is provided to the user of the terminal to allow the user to try to improve the link margin, the call initiation is terminated if the determined transmission quality does not improve thereafter to support the second link margin for the traffic channel, and a declining signal is provided at the user terminal when it is in a situation where its user may not try to improve the link margin,
a receiver to receive a call release signal from the user terminal in response to the declining signal when said determination indicates that the traffic channel cannot be supported at the second link margin , and
processing circuitry responsive to the received call release signal to terminate initiation of the call.

24. A base station according to claim 23 including a timer to time a predetermined period in response to a call confirmed message received from the user terminal, the receiver being configured to receive report signals indicative of whether the traffic channel can be supported at said second relatively low link margin, and including processing circuitry to terminate the call initiation unless the report signals indicate prior to time-out of the timer that the traffic channel can support the second link margin, or prior to the time-out in response to the call release signal being received.

25. A base station according to claim 23 or 24 configured for use in a satellite access node of a satellite mobile telecommunications network.
